# EUROPÄISCHE PATENTSCHRIFT

(11) **EP 3 636 414 B1**
(45) Veröffentlichungstag und Bekanntmachung des Hinweises auf die Patenterteilung: **08.07.2020**
(21) Anmeldenummer: 19201827.3
(22) Anmeldetag: 08.10.2019
(51) Int. Cl.: B29C 49/64, B29C 49/42

(54) **UMWANDLUNG VON ELEKTRISCHER BREMSENERGIE IN HEIZENERGIE IN EINEM VERFAHREN ZUR AUSFORMUNG VON BEHÄLTERN**
CONVERSION OF ELECTRICAL BRAKING ENERGY INTO HEATING ENERGY IN A PROCESS OF FORMING CONTAINERS
CONVERSION DE L'ÉNERGIE ÉLECTRIQUE DE FREINAGE EN ÉNERGIE DE CHAUFFAGE DANS UN PROCÉDÉ DE FORMATION DE RÉCIPIENTS

(30) Priorität: 09.10.2018 DE 102018124923
(43) Veröffentlichungstag der Anmeldung: 15.04.2020
(73) Patentinhaber: KHS Corpoplast GmbH, 22145 Hamburg (DE)
(72) Erfinder: Lesinski, Werner, 22926 Ahrensburg (DE); Herklotz, Thorsten, 22926 Ahrensburg (DE)
(74) Vertreter: Greiche, Albert

(56) Entgegenhaltungen:
- EP-A1- 3 103 616
- DE-A1-102005 011 804
- DE-A1-102011 085 387
- DE-A1-102013 104 814

## Beschreibung

Die Erfindung betrifft ein Verfahren zur Ausformung von Behältern, bei dem Vorformlinge aus einem thermoplastischen Material im Bereich einer Heizstrecke erwärmt und anschließend an eine Ausformeinrichtung übergeben werden, in der die Vorformlinge durch Einwirkung eines Druckes innerhalb von Formwerkzeugen zu den Behältern umgeformt werden.

Ein Verfahren dieser Art ist grundsätzlich bekannt und zum Beispiel in DE 10 2005 011 804 A1 beschrieben. Hierbei werden Vorformlinge aus einem thermoplastischen Material, beispielsweise aus PET (Polyethylenterephthalat), innerhalb einer Blasmaschine unterschiedlichen Bearbeitungsstationen zugeführt. Nach Temperierung der Vorformlinge entlang einer Heizstrecke werden diese an ein Blasrad übergeben, in dessen Bereich Blasstationen angeordnet sind. Die fertig geblasenen Behälter werden sodann von einem weiteren Übergaberad einer Ausgabeeinrichtung zugeführt. Den Transport und die Behandlung der Vorformlinge sowie der fertig geblasenen Behälter ermöglichen Elektromotoren.

Die Ausformung von Behältern kann auf unterschiedliche Weise erfolgen. Nachdem die aus aus einem thermoplastischen Material bestehenden Vorformlinge im Bereich einer Heizstrecke erwärmt und anschließend an eine Ausformeinrichtung übergeben wurden, werden die Vorformlinge dort expandiert. Dies kann unter Blasdruck mittels eines gasförmigen Mediums sowie unter Verwendung einer Reckstange erfolgen. Andererseits ist es möglich, anstelle eines gasförmigen Druckmediums ein flüssiges Druckmedium einzusetzen. Flüssiges Füllgut kann auf diese Weise gleichzeitig als hydraulisches Druckmedium zum Expandieren der Vorformlinge dienen.

Im Verlauf der Behälterproduktion kann es jedoch zu Situationen kommen, die einen Stillstand der Anlage erfordern. Einzelne Anlagenkomponenten, wie beispielsweise das Blasrad, müssen dann gebremst werden. Mechanische Bremsen können diese Anlagenkomponenten bremsen, doch unterliegen solche Bremsen insbesondere bei großen Komponenten einem erheblichen Verschleiß, der unerwünscht ist. Von daher ist man dazu übergegangen, Elektromotoren als Bremsen einzusetzen, weil diese ein elektromotorisches Bremsmoment erzeugen können und in Verbindung mit einem eigens hierfür vorgesehenen Bremswiderstand schnell auslaufen. Bremswiderstände stellen jedoch Bauteile dar, die zusätzlichen Bauraum einnehmen und ggf. mit großen Kühlkörpern zu versehen sind, weil beim Bremsvorgang hohe Lastströme entstehen, die im Bremswiderstand zu Wärme umgewandelt werden.

DE 10 2011 085 387 A1 beschreibt eine dynamoelektrische Maschine zum Antrieb einer PET-Streckblasmaschine. Die Maschine umfasst einen Stator mit Mitteln zur Erzeugung eines Magnetfeldes und einen direkt vom Stator angetriebenen Rotor, an dem Blasformen zur Aufnahme von PET-Vorformlingen montiert sind. Für die Maschine ist ein rekuperativer Betrieb für einen Netzausfall vorgesehen, wobei elektrische Energie, die bei einem Bremsvorgang erzeugt wird, in einem Zwischenkreisenergiespeicher gespeichert wird, der beispielsweise als Kondensator oder Zwischenkreisdrossel ausgebildet sein kann.

DE 10 2013 104 814 A1 beschreibt ein Verfahren zur Nutzung generatorisch rückgewonnener elektrischer Energie aus Bremsvorgängen für Spritzgießmaschinen, wobei die am Zwischenkreis verfügbare Überschussenergie ohne Zwischenspeicherung an einen Verbraucher weitergegeben wird, beispielsweise einen Widerstand einer Heizung eines Plastifizierzylinders.

Aufgabe der vorliegenden Erfindung ist es, die bei Vorrichtungen zur Ausformung von Behältern im Falle einer Motorbremsung und dadurch erzeugten Generatorbetrieb auftretende Bremsenergie möglichst effizient abzufangen.

Erfindungsgemäß erfolgt die Lösung der gestellten Aufgabe dadurch, dass von mindestens einem Elektromotor einer Vorrichtung im Falle eines Bremsvorgangs erzeugte elektrische Bremsenergie teilweise oder vollständig in die Heizeinrichtung gespeist wird, wobei über eine Steuereinheit ein Bremsschalter ansteuerbar ist, der bei Schließen eines elektrischen Bremskontaktes die Anschlüsse des Elektromotors mit der Heizeinrichtung verbindet. Im Übrigen erfolgt die Lösung der Aufgabe mit den Merkmalen des Anspruchs 6.

Die vorliegende Erfindung bietet den Vorteil, dass auf zusätzliche Bremswiderstände verzichtet werden kann. Bremswiderstände stellen einen Kostenfaktor dar und beanspruchen wertvollen Anlagenraum. Darüber hinaus ist mit der vorliegenden Erfindung die Möglichkeit gegeben, die Bremsenergie auch für eine Blasmaschine oder eine entsprechende Vorrichtung nutzbar zu machen. So kann beispielsweise eine Infrarotheizung betrieben werden, deren Heizstromversorgung bei einem Stillstand der Anlage unterbunden wäre.

Bei dem erfindungsgemäßen Verfahren ist über eine Steuereinheit ein Bremsschalter ansteuerbar, der bei Schließen eines elektrischen Bremskontaktes die Anschlüsse eines Elektromotors mit der Heizeinrichtung verbindet.

Nach einer Ausgestaltung der Erfindung ist über die Steuereinheit ein weiterer Bremsschalter ansteuerbar, der bei Schließen eines elektrischen Kontakts die Anschlüsse des Elektromotors mit einem weiteren Verbraucher verbindet. Auf diese Weise lässt sich der Bremsstrom verteilen und zum Beispiel auch für Kühlvorrichtungen nutzen, die überschüssige Wärme der Heizeinrichtung abführen.

Das erfindungsgemäße Verfahren eignet sich vorzugsweise zum Abbremsen großer Elektromotoren, wie beispielsweise eines zentralen Antriebsmotor für einen Antriebsstrang. Andererseits werden zunehmend Anlagen zur Ausformung von Behältern erstellt, die mehrere Elektromotoren aufweisen, von denen einzelne Motoren ebenfalls aufwendig abzubremsen sind. Ein solcher Motor ist beispielsweise der Elektromotor der Ausformeinrichtung. Die vorliegende Erfindung bietet somit auch zur Abbremsung dieser Motoren eine geeignete Lösung.

Die Aufgabe der vorliegenden Erfindung wird ebenfalls gelöst durch eine Vorrichtung mit einer Heizeinrichtung zur Erwärmung von Vorformlingen, einer Ausformeinrichtung zur Umformung der Vorformlinge sowie mindestens einem Elektromotor zum Betrieb der Vorrichtung, gekennzeichnet durch eine Steuereinheit, über die ein Bremsschalter ansteuerbar ist, der bei Schließen eines elektrischen Bremskontaktes die Anschlüsse eines Elektromotors mit der Heizeinrichtung verbindet.

Weitere Merkmale der Erfindung sind den abhängigen Ansprüchen, der Beschreibung sowie den Zeichnungen zu entnehmen.

Es zeigt
Fig. 1 einen schematischen Aufbau einer Vorrichtung **1** sowie
Fig. 2 ein schematisches Schaltbild einer Schaltung zur Einspeisung von elektrischer Bremsenergie in eine Heizeinrichtung **2** der Vorrichtung **1**.

Bevorzugte Ausführungsformen der Erfindung werden nachfolgend anhand der Zeichnungen beschrieben.

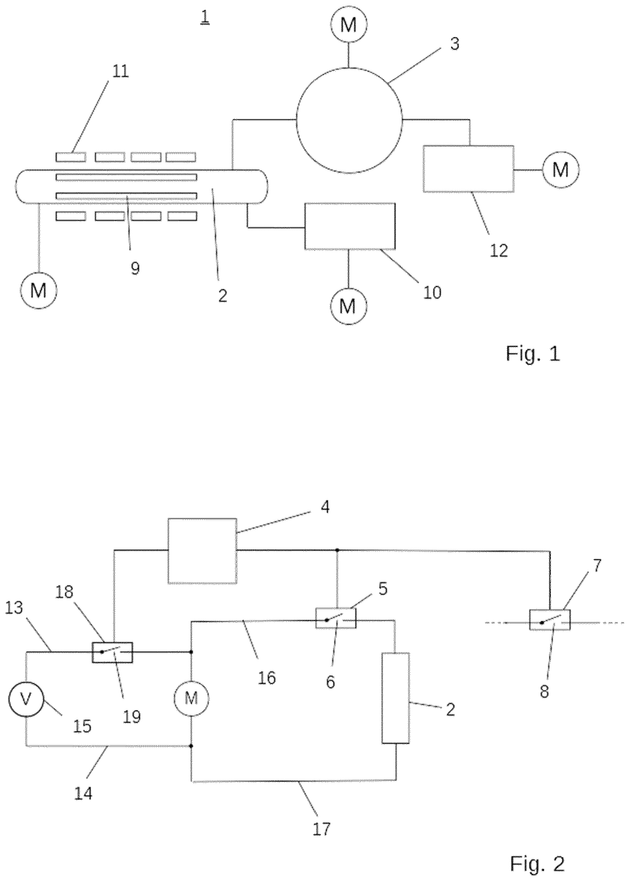

In Fig. 1 sind einzelne Komponenten der Vorrichtung **1** dargestellt. In diesem Beispiel handelt es sich um eine Blasmaschine. Von einer Übergabeeinrichtung **10** aus werden Vorformlinge von einem Übergaberad zur Heizeinrichtung **2** transportiert. Dort sind entlang einer Heizstrecke einzelne Heizstrahler **11** angeordnet, um die Vorformlinge zu temperieren. Als Heizstrahler **11** sind vorzugsweise Infrarot-Heizstrahler vorgesehen. Kühleinrichtungen mit Kühlluftkanälen (**9**) sorgen für eine gleichmäßige Temperierung der Vorformlinge und führen überschüssige Wärme ab. Nach ausreichender Temperierung der Vorformlinge werden diese an ein rotierendes Blasrad übergeben, das wesentlicher Bestandteil der Ausformeinrichtung (**3**), hier einer Blaseinrichtung, ist. Das Blasrad verfügt über einzelne Blasstationen, in denen die Vorformlinge in Behälter umgeformt werden. Die fertig geblasenen Behälter verlassen die Blasmaschine schließlich über eine Ausgabeeinrichtung **12.**

Die Vorrichtung **1** umfasst mehrere Elektromotoren **M**, die über eine nicht dargestellte Steuereinrichtung individuell angesteuert und betrieben werden können.

Das Ausführungsbeispiel gemäß Fig. 2 zeigt ein schematisches Schaltbild einer Schaltung zur Zurückspeisung von Bremsenergie in die Heizeinrichtung **2** der Vorrichtung **1.** Hierzu ist ein Elektromotor **M** über Versorgungsleitungen **13, 14** mit einer Stromquelle **15** verbunden. In der Versorgungsleitung **13** ist ein Betriebsschalter **18** angeordnet, der durch Schließen eines elektrischen Kontaktes **19** die Stromquelle **15** mit dem Elektromotor **M** verbindet. Der Betriebsschalter **18** wird von der Steuereinheit **4** gesteuert. Mit der Steuereinheit **4** ist ebenfalls der Bremsschalter **5** verbunden, dessen elektrischer Bremskontakt **6** geschlossen wird, um den Elektromotor **M** mit der Heizeinrichtung **2** kurzzuschließen. Der Bremsschalter **5** befindet sich in der Anschlussleitung **16** über die zusammen mit der Anschlussleitung **17** die Zurückspeisung der Bremsenergie erfolgt.

Von der Steuereinheit **4** können weitere Bremsschalter **7** gesteuert werden, um den Elektromotor **M** mit weiteren Verbrauchern zu verbinden. Durch Schließen des elektrischen Bremskontaktes (**8**) lässt sich der Bremsstrom verteilen und zum Beispiel auch für Kühlvorrichtungen mit Kühlluftkanälen (**9**) nutzen, die überschüssige Wärme der Heizeinrichtung abführen.

### Bezugszeichenliste

- 1: Vorrichtung
- 2: Heizeinrichtung
- 3: Ausformeinrichtung
- 4: Steuereinheit
- 5: Bremsschalter
- 6: Bremskontakt
- 7: Bremsschalter
- 8: Bremskontakt
- 9: Kühlluftkanal
- 10: Übergabeeinrichtung
- 11: Heizstrahler
- 12: Ausgabeeinrichtung
- 13: Versorgungsleitung
- 14: Versorgungsleitung
- 15: Stromquelle
- 16: Anschlussleitung
- 17: Anschlussleitung
- 18: Betriebsschalter
- 19: Kontakt

## Patentansprüche

1. Verfahren zur Ausformung von Behältern, bei dem Vorformlinge aus einem thermoplastischen Material im Bereich einer Heizeinrichtung (**2**) erwärmt und anschließend an eine Ausformeinrichtung (**3**) übergeben werden, in der die Vorformlinge durch Einwirkung eines Druckes innerhalb von Formwerkzeugen zu den Behältern umgeformt werden, **dadurch gekennzeichnet, dass** von mindestens einem Elektromotore (**M**) einer Vorrichtung (**1**) im Falle eines Bremsvorgangs erzeugte elektrische Bremsenergie teilweise oder vollständig in die Heizeinrichtung (**2**) gespeist wird, wobei über eine Steuereinheit (**4**) ein Bremsschalter (**5**) ansteuerbar ist, der bei Schließen eines elektrischen Bremskontaktes (**6**) die Anschlüsse des Elektromotors (**M**) mit der Heizeinrichtung (**2**) verbindet.

2. Verfahren nach Anspruch 1, **dadurch gekennzeichnet, dass** die Heizeinrichtung (**2**) eine Infrarotheizung aufweist, in die die Einspeisung der Bremsenergie erfolgt.

3. Verfahren nach Anspruch 1 oder 2, **dadurch gekennzeichnet, dass** über die Steuereinheit (**4**) ein weiterer Bremsschalter (**7**) ansteuerbar ist, der bei Schließen eines elektrischen Bremskontaktes (**8**) die Anschlüsse des Elektromotors (**M**) mit einem weiteren Verbraucher verbindet.

4. Verfahren nach einem der Ansprüche 1 bis 3, **dadurch gekennzeichnet, dass** es sich bei dem Elektromotor (**M**) um einen zentralen Antriebsmotor für einen Antriebsstrang handelt.

5. Verfahren nach einem der Ansprüche 1 bis 3, **dadurch gekennzeichnet, dass** mehrere Elektromotoren (**M**) dezentral betrieben werden und einzelne Elektromotoren (**M**) zur Einspeisung von Bremsenergie in die Heizeinrichtung (**2**) vorgesehen sind.

6. Vorrichtung (**1**) zur Durchführung des Verfahrens nach einem der Ansprüche 1 bis 5 mit einer Heizeinrichtung (**2**) zur Erwärmung von Vorformlingen, einer Ausformeinrichtung (**3**) zur Umformung der Vorformlinge sowie mindestens einem Elektromotor (**M**) zum Betrieb der Vorrichtung (**1**), **gekennzeichnet durch** eine Steuereinheit (**4**), über die ein Bremsschalter (**5**) ansteuerbar ist, der bei Schließen eines elektrischen Bremskontaktes (**6**) die Anschlüsse des Elektromotors (**M**) mit der Heizeinrichtung (**2**) verbindet.

7. Vorrichtung (**1**) nach Anspruch 6, **dadurch gekennzeichnet, dass** über die Steuereinheit (**4**) ein weiterer Bremsschalter (**7**) ansteuerbar ist, der bei Schließen eines elektrischen Bremskontaktes (**8**) die Anschlüsse des Elektromotors (**M**) mit einem weiteren Verbraucher verbindet.

8. Vorrichtung (**1**) nach Anspruch 6 oder 7, **dadurch gekennzeichnet, dass** mehrere Elektromotoren (**M**) dezentral betrieben und individuell abgebremst werden.

9. Vorrichtung (**1**) nach Anspruch 8, **dadurch gekennzeichnet, dass** jeder einzelne Elektromotor (**M**) mit der Heizeinrichtung (**2**) verbindbar ist.

## Claims

1. Method of molding containers, in which preforms of a thermoplastic material are heated in the region of a heating device (2) and are then transferred to a molding device (3), in which the preforms are shaped into the containers by the action of a pressure within molding tools, **characterized in that** electrical braking energy generated by at least one electric motor (M) of a device (1) in the event of a braking operation is fed partially or completely into the heating device (2), wherein a brake switch (5) is controllable via a control unit (4), which brake switch (5) connects the connectors of the electric motor (M) to the heating device (2) when an electrical brake contact (6) is closed.

2. Method according to claim 1, **characterized in that** the heating device (2) has an infrared heating system into which the braking energy is fed.

3. Method according to claim 1 or 2, **characterized in that** a further brake switch (7) can be controlled via the control unit (4), which, when an electrical brake contact (8) is closed, connects the connectors of the electric motor (M) to a further consumer.

4. Method according to one of claims 1 to 3, **characterized in that** the electric motor (M) is a central drive motor for a drive train.

5. Method according to one of claims 1 to 3, **characterized in that** a plurality of electric motors (M) are operated in a decentralized manner and individual electric motors (M) are provided for feeding braking energy into the heating device (2).

6. Device (1) for carrying out the method according to one of claims 1 to 5, having a heating device (2) for heating preforms, a molding device (3) for molding the preforms and at least one electric motor (M) for operating the device (1), **characterized by** a control unit (4), via which a brake switch (5) can be controlled, which connects the connectors of the electric motor (M) to the heating device (2) when an electric brake contact (6) is closed.

7. Device (1) according to claim 6, **characterized in that** a further brake switch (7) can be controlled via the control unit (4), which, when an electrical brake contact (8) is closed, connects the connectors of the electric motor (M) to a further consumer.

8. Device (1) according to claim 6 or 7, **characterized in that** several electric motors (M) are operated in a decentral manner and braked individually.

9. Device (1) according to claim 8, **characterized in that** each individual electric motor (M) can be connected to the heating device (2).

## Revendications

1. Procédé de moulage de récipients, dans lequel des préformes en matière thermoplastique sont chauffées dans la zone d'un dispositif de chauffage (2) et sont ensuite transférées à un dispositif de moulage (3), dans lequel les préformes sont façonnées en récipients par l'action d'une pression à l'intérieur d'outils de moulage, **caractérisé en ce que** l'énergie électrique de freinage produite par au moins un moteur électrique (M) d'un dispositif (1) lors d'un freinage est injectée partiellement ou totalement dans le dispositif de chauffage (2), un commutateur de freinage (5) pouvant être commandé par une unité de commande (4), lequel commutateur de freinage (5) relie les connexions du moteur électrique (M) au dispositif de chauffage (2) lorsqu'un contact électrique de freinage (6) est fermé.

2. Procédé selon la revendication 1, **caractérisé en ce que** le dispositif de chauffage (2) possède un système de chauffage à infrarouge dans lequel l'énergie de freinage est introduite.

3. Procédé selon la revendication 1 ou 2, **caractérisé en ce qu'**un autre commutateur de freinage (7) peut être commandé via l'unité de commande (4), qui, lorsqu'un contact électrique de freinage (8) est fermé, relie les connexions du moteur électrique (M) à un autre consommateur.

4. Procédé selon l'une des revendications 1 à 3, **caractérisée en ce que** le moteur électrique (M) est un moteur d'entraînement central pour un groupe motopropulseur.

5. Procédé selon l'une des revendications 1 à 3, **caractérisé en ce que** plusieurs moteurs électriques (M) sont exploités de manière décentralisée et que des moteurs électriques individuels (M) sont prévus pour l'alimentation en énergie de freinage du dispositif de chauffage (2).

6. Dispositif (1) pour la mise en œuvre du procédé selon l'une des revendications 1 à 5, avec un dispositif de chauffage (2) pour le chauffage de préformes, un dispositif de moulage (3) pour le formage des préformes et au moins un moteur électrique (M) pour le fonctionnement du dispositif (1), **caractérisé par** une unité de commande (4), par laquelle un un commutateur de freinage (5) peut être commandé, qui relie les connexions du moteur électrique (M) au dispositif de chauffage (2) lorsqu'un contact électrique de freinage (6) est fermé.

7. Dispositif (1) selon la revendication 6, **caractérisé en ce qu'**un autre un commutateur de freinage (7) peut être commandé via l'unité de commande (4), qui, lorsqu'un contact électrique de freinage (8) est fermé, relie les connexions du moteur électrique (M) à un autre consommateur.

8. Dispositif (1) selon la revendication 6 ou 7, **caractérisé en ce que** plusieurs moteurs électriques (M) sont actionnés de manière décentralisée et freinés individuellement.

9. Dispositif (1) selon la revendication 8, **caractérisé en ce que** chaque moteur électrique individuel (M) peut être connecté au dispositif de chauffage (2).
